# EUROPÄISCHE PATENTSCHRIFT

(11) **EP 4 118 943 B1**
(45) Veröffentlichungstag und Bekanntmachung des Hinweises auf die Patenterteilung: **23.10.2024**
(21) Anmeldenummer: 22167049.0
(22) Anmeldetag: 07.04.2022
(51) Int. Cl.: A01B 69/04, G05D 1/00, A01B 79/00

(54) **VERFAHREN ZUM PLANEN EINER FELDBEARBEITUNGSROUTE EINER LANDWIRTSCHAFTLICHEN ARBEITSMASCHINE**
METHOD FOR PLANNING A FIELD PROCESSING ROUTE OF AN AGRICULTURAL WORKING MACHINE
PROCÉDÉ DE PLANIFICATION D'UN ITINÉRAIRE DE TRAITEMENT D'UN CHAMP D'UN ENGIN DE TRAVAIL AGRICOLE

(30) Priorität: 15.07.2021 DE 102021118272
(43) Veröffentlichungstag der Anmeldung: 18.01.2023
(73) Patentinhaber: CLAAS E-Systems GmbH, 49201 Dissen (DE)
(72) Erfinder: Hemsen, Moritz, 59872 Meschede (DE)
(74) Vertreter: CLAAS Gruppe

(56) Entgegenhaltungen:
- EP-A1- 2 236 020
- EP-A2- 2 918 155
- DE-A1- 102015 204 768
- US-A1- 2006 178 825

## Beschreibung

Die vorliegende Erfindung betrifft ein Verfahren zum Planen einer Feldbearbeitungsroute einer landwirtschaftlichen Arbeitsmaschine gemäß dem Oberbegriff von Anspruch 1 sowie eine selbstfahrende landwirtschaftliche Arbeitsmaschine gemäß dem Anspruch 5. Der bekannte Stand der Technik (DE 10 2015 204 768 A1) von dem die Erfindung ausgeht, betrifft ein Verfahren gemäß dem Oberbegriff von Anspruch 1. Demnach ist ein Verfahren bekannt, bei dem neben einer Fahrtroute eine Arbeitsbreite eines Pflugs angepasst wird, um Überlappungen einer Bodenbearbeitung bei nicht rechteckigen Feldgrenzen zu vermeiden und bei dem Bahnen einer Feldbearbeitungsroute sukzessive von einer Form mit mehreren Einlenkpunkten an eine gerade Linie angepasst werden. Die WO 2018/166561 A1 offenbart ein Verfahren zur Anpassung einer Fahrtroute an nicht rechteckige Feldgrenzen. Das Dokument EP 2 918 155 A2 beschreibt ein Verfahren zum Anpassen einer Fahrtroute an Feldgrenzen.

Der Begriff "landwirtschaftliche Arbeitsmaschine" ist vorliegend weit zu verstehen. Darunter fallen nicht nur Erntemaschinen wie Mähdrescher und Feldhäcksler, sondern auch Zugmaschinen wie Traktoren o. dgl.

Häufig werden im realen Einsatz heute zwei verschiedene Referenzlinienmuster unabhängig von einander genutzt, um ein Feld abzuarbeiten. Diese sind einerseits gerade, parallele Bahnen und andererseits an eine Feldgrenze, insbesondere Feldaußengrenze, adaptierte, gekrümmte und/oder geknickte Bahnen. Hierbei ergeben sich mehrere Probleme. Wird eine erste Bahn entlang der Feldkontur angelegt, so ergeben sich teils sehr starke Kurvenradien, die aus vielerlei Gesichtspunkten nachteilig sind. Zum einen reduzieren starke Kurvenfahrten unter Feldbedingungen mit Anbaugeräten den Fahrkomfort, zum anderen führen diese anspruchsvollen Pfade zu teils erheblichen Belastungen sowohl für das Anbaugerät als auch bspw. für die Koppelpunkte des Traktors. Auch im Bereich der Erntemaschinen ist die dauerhafte Nutzung von gekrümmten oder geknickten Bahnen problematisch, da diese bspw. den Abtankvorgang während der Fahrt erschweren sowie auch hier den Fahrkomfort nachteilig beeinflussen. Um dies zu reduzieren wird daher in der Praxis häufig nach ein oder zwei Bahnen entlang der Kontur des Feldes die gekrümmte oder geknickte Bahn durch eine gerade Bahn ersetzt. Dieser Prozess ist manuell und erfordert daher ein Eingreifen des Fahrers und führt dazu, dass mindesten eine weitere Spur nicht unter Zuhilfenahme des automatischen Lenksystems, sondern manuell abgefahren werden muss. Zudem bleiben bei dieser manuellen Vorgehensweise zwangsweise Keile bzw. Spitzen im Feld unbearbeitet, die im Nachgang zusätzlich durch manuelles Abfahren bearbeitet werden müssen.

Es ist dabei eine Herausforderung den bekannten Stand der Technik zu verbessern.

Der Erfindung liegt das Problem zugrunde, das bekannte Verfahren derart auszugestalten und weiterzubilden, dass hinsichtlich der genannten Herausforderung eine weitere Optimierung erreicht wird.

Das obige Problem wird durch die Merkmale von Anspruch 1 gelöst.

Es sind zwar Systeme bekannt, die einen automatischen Übergang zwischen gekrümmten oder geknickten Bahnen und geraden Bahnen herstellen, diese Systeme können jedoch nicht alle Faktoren inklusive der Nutzerpräferenzen berücksichtigen. Wesentlich ist die grundsätzliche Überlegung, durch ein System, in das der Benutzer steuernd bei der Planung eingreifen kann, eine bessere Planung der Feldbearbeitungsroute zu ermöglichen. Dafür kann der Benutzer eine Eingabe tätigen, die ein Steuerungssystem sodann zur Parametrisierung des Übergangs nutzt.

Im Einzelnen wird vorgeschlagen, dass das Steuerungsgerät die Begradigung der mittleren Bahnen abhängig von einer Benutzereingabe parametrisiert.

Besonders bevorzugte Ausgestaltungen sind Gegenstand der Unteransprüche.

Nach einer weiteren Lehre gemäß Anspruch 5, der eigenständige Bedeutung zukommt, wird eine selbstfahrende landwirtschaftliche Arbeitsmaschine mit einem Fahrerassistenzsystem eingerichtet zur Durchführung des vorschlagsgemäßen Verfahrens und eingerichtet zum automatischen Abfahren der Feldbearbeitungsroute beansprucht. Auf alle Ausführungen zu dem vorschlagsgemäßen Verfahren darf verwiesen werden.

Im Folgenden wird die Erfindung anhand einer lediglich Ausführungsbeispiele darstellenden Zeichnung näher erläutert. In der Zeichnung zeigt
- Fig. 1: das vorschlagsgemäße Verfahren in einer beispielhaften Anwendung auf einem landwirtschaftlichen Feld und
- Fig. 2: in a) und b) je eine Variante einer Feldbearbeitungsroute abhängig von der Benutzereingabe.

Die vorschlagsgemäße Lösung lässt sich auf einen weiten Bereich landwirtschaftlicher Arbeitsmaschinen 1, insbesondere selbstfahrender landwirtschaftlicher Arbeitsmaschinen 1, anwenden. Dazu gehören Zugmaschinen, insbesondere Traktoren, und Erntemaschinen, insbesondere Mähdrescher, Feldhäcksler o.dgl.

Das in den Figuren dargestellte und insoweit bevorzugte Ausführungsbeispiel betrifft ein Verfahren zum Planen einer Feldbearbeitungsroute 2 einer landwirtschaftlichen Arbeitsmaschine 1 auf einem landwirtschaftlichen Feld 3 mittels eines Steuerungsgeräts 4, insbesondere eines Fahrerassistenzsystem der landwirtschaftlichen Arbeitsmaschine 1, wobei das Steuerungsgerät 4 die Feldbearbeitungsroute 2 plant, wobei die Feldbearbeitungsroute 2, insbesondere zusammenhängende, nacheinander zu bearbeitende Bahnen aufweist, wobei das Steuerungsgerät 4 die Feldbearbeitungsroute 2 derart plant, dass die Feldbearbeitungsroute 2 einen ersten Abschnitt 5 mit mindestens einer ersten Bahn 6 aufweist, die gerade verläuft, dass die Feldbearbeitungsroute 2 einen zweiten Abschnitt 7 mit mindestens einer zweiten Bahn 8 aufweist, die mindestens einen Knick und/oder eine Kurve aufweist.

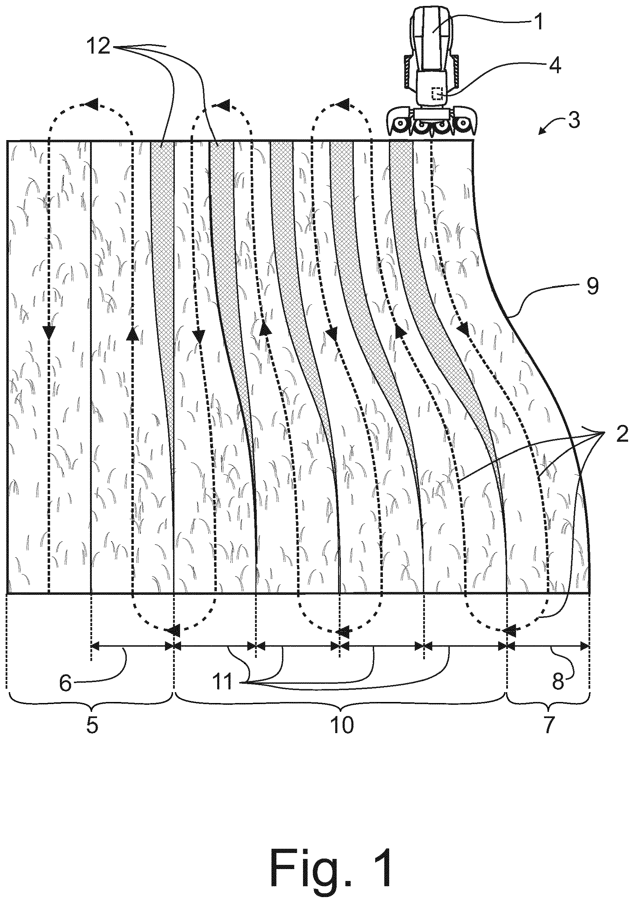

Derartige Bahnen einer Feldbearbeitungsroute 2 sind grundsätzlich in der Landwirtschaft bekannt. Hier und vorzugsweise verläuft eine Bahn von einer Feldgrenze 9 zu einer anderen Feldgrenze 9, wobei diese Feldgrenzen 9 quer oder im Wesentlichen orthogonal zu den Bahnen verlaufen. In Fig. 1 sind dies die oberen und unteren Feldgrenzen 9. An die Bahn schließt sich üblicherweise ein Wendebereich an, in dem die landwirtschaftliche Arbeitsmaschine 1 wenden und in eine anschließend zu bearbeitende Bahn einfahren kann. Die anschließend zu bearbeitende Bahn muss dabei nicht örtlich neben der vorherigen Bahn liegen, es können auch Bahnen übersprungen und später bearbeitet werden.

Vorliegend wird unter einer zweiten Bahn 8 eine solche Bahn verstanden, die nicht gerade verläuft, sondern mindestens einen Lenkvorgang der landwirtschaftlichen Arbeitsmaschine 1 erfordert. Dieser kann im Wesentlichen an einer Knickstelle vorgenommen werden oder kontinuierlich im Sinne eine Kurve gefahren werden.

Es ist hier nun so, dass das Steuerungsgerät 4 die Feldbearbeitungsroute 2 derart plant, dass die Feldbearbeitungsroute 2 einen mittleren Abschnitt 10 mit mehreren mittleren Bahnen 11 aufweist, der örtlich zwischen dem ersten und dem zweiten Abschnitt 7 liegt, wobei in dem mittleren Abschnitt 10 der Feldbearbeitungsroute 2 die Bahnen ausgehend von der zweiten Bahn 8 in Richtung der ersten Bahn 6 sukzessive begradigt und so an die erste Bahn 6 angepasst werden. Der Algorithmus zur Berechnung der Begradigung kann jedoch selbstverständlich auch von der ersten Bahn 6 ausgehen oder anderweitig die Anpassung berechnen.

Die Bahnen zwischen der ersten und der zweiten Bahn 8 bilden also einen Übergang. Je weniger dieser mittleren Bahnen 11 dabei nicht gerade sind, desto mehr Bahnen können bei der Bearbeitung des Feldes 3 gerade und somit auf einfache Art und Weise abgefahren werden. Dadurch steigt jedoch potentiell der Überlapp 12 zwischen benachbarten Bahnen oder eine Menge an Lücken, die anschließend nachbearbeitet werden müssen. Auch der Fahrkomfort auf den nicht geraden Bahnen sinkt gegebenenfalls, wenn diese ein starkes Einlenken erfordern.

Wesentlich ist nun, dass das Steuerungsgerät 4 die Begradigung der mittleren Bahnen 11 abhängig von einer Benutzereingabe parametrisiert.

Fig. 1 zeigt das Verfahren in der Anwendung auf einem landwirtschaftlichen Feld 3. Rechts im Feld 3 ist die zweite Bahn 8 zu sehen, nach links hin werden die mittleren Bahnen 11 sukzessive grader, wobei der schraffierte Bereich den Überlapp 12 darstellt. Links schließlich sind die erste Bahn 6 und eine weitere gerade Bahn des ersten Abschnitts 5 zu sehen.

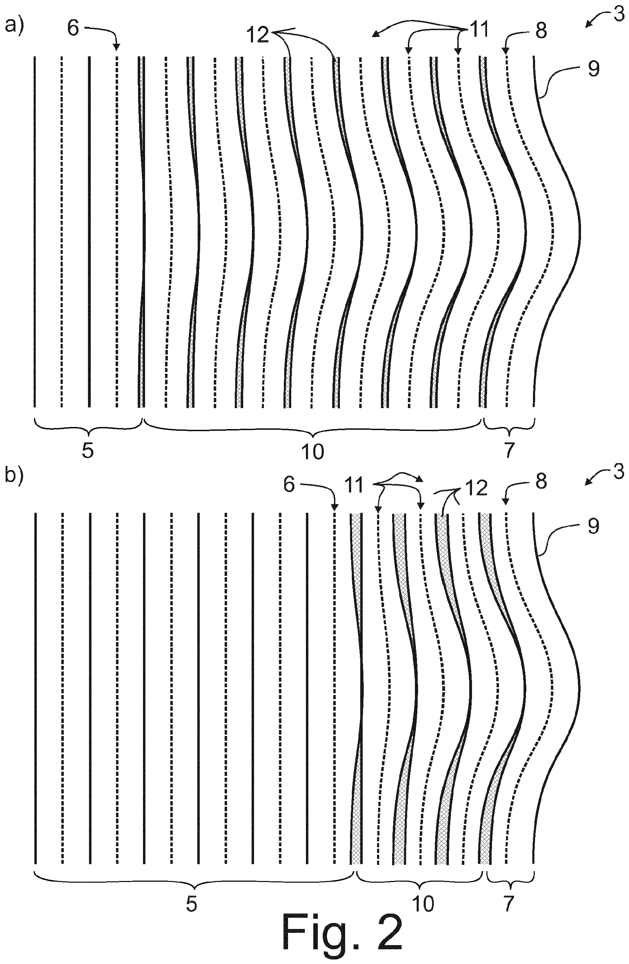

Die Benutzereingabe betrifft hier also einen Parameter, der von dem Steuerungsgerät 4 genutzt wird, um die Begradigung der mittleren Bahnen 11 an die Wünsche des Benutzers anzupassen. Der Benutzer kann diverse technische Parameter und Eigenheiten des Feldes 3 besser beurteilen. Würde dem Benutzer nur eine einzige vorgeschlagene Möglichkeit der Begradigung ohne Auswahlmöglichkeiten vorgegeben, müsste dieser gegebenenfalls manuell eingreifen. Fig. 2 zeigt konkret zwei unterschiedliche Feldbearbeitungsrouten 2, die abhängig von der Benutzereingabe errechnet werden können.

Die Feldbearbeitungsroute 2 besteht hier und vorzugsweise großteils aus annähernd parallelen Bahnen. Sie besteht vorzugsweise zumindest zu 50% aus parallelen Bahnen.

Vorzugsweise wird die Feldbearbeitungsroute 2 von der landwirtschaftlichen Arbeitsmaschine 1 abgefahren. Dabei kann die Feldbearbeitungsroute 2 einem Benutzer vorgegeben werden oder zumindest teilweise oder vollständig automatisch von der landwirtschaftlichen Arbeitsmaschine 1 abgefahren werden. Vorzugsweise lenkt die landwirtschaftliche Arbeitsmaschine 1 automatisch. Die Arbeitsbreite, insbesondere einer Bodenbearbeitung, kann konstant oder variabel sein.

Wie erläutert nimmt der Benutzer Einfluss auf einen Parameter der Begradigung wie einen maximalen Überlapp 12 der Bahnen, eine maximale Änderung des Einlenkwinkels oder dergleichen.

Grundsätzlich werden dabei vorzugsweise Sicherheitsaspekte bei der Begradigung berücksichtigt, insbesondere beispielsweise ein maximaler Einlenkwinkel.

Weiter ist hier und vorzugsweise vorgesehen, dass die Benutzereingabe einen Krümmungsparameter und/oder einen Einlenkpunktparameter umfasst.

Unter einem Krümmungsparameter wird dabei ein Parameter verstanden, der direkten Einfluss auf die Änderung der Krümmung zwischen benachbarten mittleren Bahnen 11 hat. Unter einem Einlenkpunktparameter wird dabei ein Parameter verstanden, der direkten Einfluss auf eine Änderung, insbesondere einen Versatz entlang der Bahn oder einen Winkel, der Einlenkpunkte zwischen benachbarten mittleren Bahnen 11 hat.

Vorzugsweise ist es so, dass die Benutzereingabe eine maximale Krümmungsänderung zwischen zwei benachbarten mittleren Bahnen 11 umfasst, und/oder, dass die Benutzereingabe eine minimale und/oder maximale Menge an nicht geraden mittleren Bahnen 11 umfasst, und/oder, dass die Benutzereingabe eine Priorisierung eines Fahrkomforts gegenüber einem maximalen Überlapp 12 umfasst, und/oder, dass die Benutzereingabe einen maximalen Überlapp 12 und/oder eine maximale Lücke umfasst, vorzugsweise, dass das Steuerungsgerät 4 abhängig von der Menge an maximalen nicht geraden Bahnen einen Überlapp 12 der Bahnen an den Benutzer ausgibt und dass der Benutzer die Menge an maximalen nicht geraden Bahnen erneut anpassen kann.

Der Überlapp 12 ist die Menge an doppelt bearbeitetem Feld 3, die Lücke ist die Menge an nicht bearbeitetem Feld 3. Wird einer dieser Werte voraussichtlich einen Schwellwert überschreiten, kann eine Warnung an den Benutzer ausgegeben werden. Bevorzugt ist es hier so, dass der Benutzer beispielsweise eingeben kann, dass die Begradigung nach vier nebeneinanderliegenden Bahnen abgeschlossen sein soll. Der Benutzer bekommt dann einen erwarteten Überlapp 12 angezeigt und kann auf dieser Basis entscheiden.

Weiter ist hier und vorzugsweise vorgesehen, dass das Steuerungsgerät 4 die Begradigung der mittleren Bahnen 11 zusätzlich abhängig von einem Anbaugerät und/oder einer Bearbeitungsart parametrisiert. Beispielsweise ist ein Pflug mit variabler Arbeitsbreite anders zu behandeln als ein Anbaugerät mit konstanter Arbeitsbreite. Auch verzeihen manche Feldbearbeitungen 3 einen Überlapp 12 deutlich besser als andere.

Weiter ist hier und vorzugsweise vorgesehen, dass das Steuerungssystem die zweite Bahn 8 an eine innere und/oder äußere Feldgrenze 9 anpasst, vorzugsweise, dass beidseits der ersten Bahn 6 je eine zweite Bahn 8 verläuft und das Steuerungssystem jeweils mittlere Bahnen 11 an die erste und die zweiten Bahnen 8 anpasst.

Vorliegend wird unterschieden zwischen äußeren Feldgrenzen 9 und inneren Feldgrenzen 9. Innere Feldgrenzen 9 verlaufen beispielsweise um einen Baum, einen Strommast oder Ähnliches und liegen innerhalb von äußeren Feldgrenzen 9.

Gemäß einer weiteren Lehre, der eigenständige Bedeutung zukommt, wird eine selbstfahrende landwirtschaftliche Arbeitsmaschine 1 mit einem Fahrerassistenzsystem eingerichtet zur Durchführung des Verfahrens nach einem der vorhergehenden Ansprüche und eingerichtet zum automatischen Abfahren der Feldbearbeitungsroute 2 vorgeschlagen. Auf alle Ausführungen zu dem vorschlagsgemäßen Verfahren darf verwiesen werden.

### Bezugszeichenliste

- 1: landwirtschaftlichen Arbeitsmaschine
- 2: Feldbearbeitungsroute
- 3: Feld
- 4: Steuerungsgerät
- 5: erster Abschnitt
- 6: erste Bahn
- 7: zweiter Abschnitt
- 8: zweite Bahn
- 9: Feldgrenze
- 10: mittlerer Abschnitt
- 11: mittlere Bahnen
- 12: Überlapp

## Patentansprüche

1. Verfahren zum Planen einer Feldbearbeitungsroute (2) einer landwirtschaftlichen Arbeitsmaschine (1) auf einem landwirtschaftlichen Feld (3) mittels eines Steuerungsgeräts (4), insbesondere eines Fahrerassistenzsystem der landwirtschaftlichen Arbeitsmaschine (1), wobei das Steuerungsgerät (4) die Feldbearbeitungsroute (2) plant, wobei die Feldbearbeitungsroute (2), insbesondere zusammenhängende, nacheinander zu bearbeitende Bahnen aufweist,
wobei das Steuerungsgerät (4) die Feldbearbeitungsroute (2) derart plant, dass die Feldbearbeitungsroute (2) einen ersten Abschnitt (5) mit mindestens einer ersten Bahn (6) aufweist, die gerade verläuft, dass die Feldbearbeitungsroute (2) einen zweiten Abschnitt (7) mit mindestens einer zweiten Bahn (8) aufweist, die mindestens einen Knick und/oder eine Kurve aufweist und
wobei das Steuerungsgerät (4) die Feldbearbeitungsroute (2) derart plant, dass die Feldbearbeitungsroute (2) einen mittleren Abschnitt (10) mit mehreren mittleren Bahnen (11) aufweist, der örtlich zwischen dem ersten und dem zweiten Abschnitt (7) liegt, wobei in dem mittleren Abschnitt (10) der Feldbearbeitungsroute (2) die Bahnen ausgehend von der zweiten Bahn (8) in Richtung der ersten Bahn (6) sukzessive begradigt und so an die erste Bahn (6) angepasst werden,
**dadurch gekennzeichnet,**
**dass** das Steuerungsgerät (4) die Begradigung der mittleren Bahnen (11) abhängig von einer Benutzereingabe parametrisiert.

2. Verfahren nach Anspruch 1, **dadurch gekennzeichnet, dass** die Benutzereingabe einen Krümmungsparameter und/oder einen Einlenkpunktparameter umfasst, vorzugsweise, dass die Benutzereingabe eine maximale Krümmungsänderung zwischen zwei benachbarten mittleren Bahnen (11) umfasst, und/oder, dass die Benutzereingabe eine minimale und/oder maximale Menge an nicht geraden mittleren Bahnen (11) umfasst, und/oder, dass die Benutzereingabe eine Priorisierung eines Fahrkomforts gegenüber einem maximalen Überlapp (12) umfasst, und/oder, dass die Benutzereingabe einen maximalen Überlapp (12) und/oder eine maximale Lücke umfasst, vorzugsweise, dass das Steuerungsgerät (4) abhängig von der Menge an maximalen nicht geraden Bahnen einen Überlapp (12) der Bahnen an den Benutzer ausgibt und dass der Benutzer die Menge an maximalen Bahnen erneut anpassen kann.

3. Verfahren nach Anspruch 1 oder 2, **dadurch gekennzeichnet, dass** das Steuerungsgerät (4) die Begradigung der mittleren Bahnen (11) zusätzlich abhängig von einem Anbaugerät und/oder einer Bearbeitungsart parametrisiert.

4. Verfahren nach einem der vorhergehenden Ansprüche, **dadurch gekennzeichnet, dass** das Steuerungssystem die zweite Bahn (8) an eine innere und/oder äußere Feldgrenze (9) anpasst, vorzugsweise, dass beidseits der ersten Bahn (6) je eine zweite Bahn (8) verläuft und das Steuerungssystem jeweils mittlere Bahnen (11) an die erste und die zweiten Bahnen (8) anpasst.

5. Selbstfahrende landwirtschaftliche Arbeitsmaschine mit einem Fahrerassistenzsystem eingerichtet zur Durchführung des Verfahrens nach einem der vorhergehenden Ansprüche und eingerichtet zum automatischen Abfahren der Feldbearbeitungsroute (2).

## Claims

1. A method for planning a field cultivation route (2) for an agricultural working machine (1) on an agricultural field (3) by means of a control device (4), in particular a driver assistance system of the agricultural working machine (1), wherein the control device (4) plans the field cultivation route (2), wherein the field cultivation route (2) has paths, which in particular are contiguous, for cultivation one after the other,
wherein the control device (4) plans the field cultivation route (2) in a manner such that the field cultivation route (2) has a first section (5) with at least one first path (6) which runs in a straight line, in that the field cultivation route (2) has a second section (7) with at least one second path (8) which has at least one bend and/or curve, and
wherein the control device (4) plans the field cultivation route (2) in a manner such that the field cultivation route (2) has a central section (10) with a plurality of central paths (11) which are positioned between the first and the second section (7), wherein in the central section (10) of the field cultivation route (2), the paths gradually straighten out starting from the second path (8), and in this manner are adjusted to the first path (6),
**characterized in that**
the control device (4) parameterizes the straightening of the central paths (11) as a function of a user input.

2. The method according to claim 1, **characterized in that** the user input comprises a curvature parameter and/or a turning point parameter, preferably **in that** the user input comprises a maximum variation in the curvature between two adjacent central paths (11), and/or **in that** the user input comprises a minimum and/or maximum quantity of central paths (11) which are not straight, and/or **in that** the user input comprises a prioritisation of driving comfort over a maximum overlap (12), and/or **in that** the user input comprises a maximum overlap (12) and/or a maximum gap, preferably **in that**, as a function of the maximum quantity of paths which are not straight, the control device (4) outputs an overlap (12) of the paths to the user and **in that** the user can adapt the maximum quantity of paths afresh.

3. The method according to claim 1 or claim 2, **characterized in that** the control device (4) additionally parameterizes the straightening of the central paths (11) as a function of an attachment and/or of a type of cultivation.

4. The method according to one of the preceding claims, **characterized in that** the control system adjusts the second path (8) to an inner and/or outer field boundary (9), preferably **in that** a respective second path (8) runs along both sides of the first path (6) and the control system adapts respective central paths (11) to the first and the second paths (8).

5. A self-propelled agricultural working machine with a driver assistance system configured to carry out the method according to one of the preceding claims and configured to automatically traverse the field cultivation route (2).

## Revendications

1. Procédé de planification d'un itinéraire de traitement d'un champ (2) d'un engin de travail agricole (1) dans un champ agricole (3), à l'aide d'un dispositif de commande (4), en particulier un système d'assistance au conducteur de l'engin de travail agricole (1), selon lequel le dispositif de commande (4) planifie l'itinéraire de traitement d'un champ (2), selon lequel l'itinéraire de traitement d'un champ (2) présente des couloirs de passage, notamment contigus, devant être traités,
selon lequel le dispositif de commande (4) planifie l'itinéraire de traitement d'un champ (2) de manière à ce que l'itinéraire de traitement d'un champ (2) présente une première partie (5) avec au moins un premier couloir (6) qui est rectiligne, que l'itinéraire de traitement d'un champ (2) planifie une deuxième partie (7) avec au moins un deuxième couloir (8) qui présente au moins un coude et/ou une courbe, et
selon lequel le dispositif de commande (4) planifie l'itinéraire de traitement d'un champ (2) de manière à ce que l'itinéraire de traitement d'un champ (2) présente une partie intermédiaire (10) qui comporte plusieurs couloirs intermédiaires (11) et se situe dans l'espace entre la première et la deuxième partie (7), sachant que dans la partie intermédiaire (10) de l'itinéraire de traitement d'un champ (2), les couloirs sont successivement redressés en partant du deuxième couloir (8), en direction du premier couloir (6), et sont ainsi adaptés au premier couloir (6),
**caractérisé en ce que**
le dispositif de commande (4) paramètre le redressement des couloirs intermédiaires (11) en fonction d'une saisie de l'utilisateur.

2. Procédé selon la revendication 1, **caractérisé en ce que** la saisie utilisateur comprend un paramètre de courbure et/ou un paramètre de point de braquage, de préférence **en ce que** la saisie utilisateur comprend une variation de courbure maximale entre deux couloirs intermédiaires (11) voisins, et/ou **en ce que** la saisie utilisateur comprend une quantité minimale et/ou maximale de couloirs intermédiaires (11) non rectilignes, et/ou **en ce que** la saisie utilisateur comprend une priorisation d'un confort de conduite par rapport à un chevauchement (12) maximal, et/ou **en ce que** la saisie utilisateur comprend un chevauchement (12) maximal et/ou un écart maximal, de préférence que le dispositif de commande (4) émet un chevauchement (12) des couloirs à destination de l'utilisateur, en fonction de la quantité maximale de couloirs non rectilignes, et que l'utilisateur peut adapter à nouveau la quantité maximale de couloirs.

3. Procédé selon la revendication 1 ou 2, **caractérisé en ce que** le dispositif de commande (4) paramètre en outre le redressement des couloirs intermédiaires (11) en fonction d'un outil attelé et/ou d'un type de traitement.

4. Procédé selon une des revendications précédentes, **caractérisé en ce que** le dispositif de commande adapte le deuxième couloir (8) à une limite de champ (9) intérieure et/ou extérieure, de préférence **en ce qu'**un deuxième couloir (8) s'étend respectivement de part et d'autre du premier couloir (6) et le dispositif de commande adapte respectivement des couloirs intermédiaires (11) au premier et aux deuxièmes couloirs (8).

5. Engin de travail agricole automoteur doté d'un système d'assistance au conducteur conçu pour la mise en oeuvre du procédé selon une des revendications précédentes, et conçu pour l'exécution automatique de l'itinéraire de traitement d'un champ (2).
